# EUROPEAN PATENT SPECIFICATION

(11) **EP 2 700 224 B1**
(45) Date of publication and mention of the grant of the patent: **08.03.2017**
(21) Application number: 12792676.4
(22) Date of filing: 22.05.2012
(51) Int. Cl.: H04N 5/91, H04N 5/225, H04N 5/232, G11B 27/00, H04N 5/76, H04N 5/77, H04N 9/804

(54) **PHOTOGRAPHING APPARATUS AND METHOD, IMAGE REPRODUCTION APPARATUS AND METHOD, PROGRAM, AND RECORDING MEDIUM**
FOTOGRAFIEVORRICHTUNG UND -VERFAHREN, BILDWIEDERGABEVORRICHTUNG UND -VERFAHREN, PROGRAMM UND AUFZEICHNUNGSMEDIUM
APPAREIL ET PROCÉDÉ DE PHOTOGRAPHIE, APPAREIL ET PROCÉDÉ DE REPRODUCTION D'IMAGE, PROGRAMME ET SUPPORT D'ENREGISTREMENT

(30) Priority: 30.05.2011 JP 2011120403
(43) Date of publication of application: 26.02.2014
(73) Proprietor: Sony Corporation, Tokyo 108-0075 (JP)
(72) Inventor: YAMAMOTO, Kazuyuki, Tokyo 108-0075 (JP)
(74) Representative: MFG Patentanwälte Meyer-Wildhagen Meggle-Freund Gerhard PartG mbB
(86) International application number: PCT/JP2012/003343
(87) International publication number: WO 2012/164873

(56) References cited:
- JP-A- 2001 154 226
- JP-A- 2001 154 226
- JP-A- 2005 115 253
- JP-A- 2005 115 253
- JP-A- 2005 348 178
- JP-A- 2005 348 178
- JP-A- 2007 286 434
- JP-A- 2007 286 434
- JP-A- 2009 100 314
- JP-A- 2010 045 765
- JP-A- 2010 045 765

## Description

### Technical Field

The present technology relates to a photographing apparatus and method, an image reproduction apparatus and method, a program, and a recording medium, and in particular, to a photographing apparatus and method, an image reproduction apparatus and method, a program, and a recording medium which enable more freely the decision whether to reproduce recorded images to be performed.

### Background Art

Conventionally, the recording of video using a camcorder is controlled using a video photographing button in users' hand.

The reproduction of the recorded video can be performed using the camcorder, a personal computer, or the like. Here, when for example, there is a scene which is not necessary to be reproduced, a user just continuously watches the video or the user actively skips the scene using a fast-forward button or a fast-forward icon.

A scene, which was continuously recorded because the user forgot to turn off a REC button even when the photographing of a desired subject has ended, may be considered as an example of an unnecessary scene. In addition, a scene which includes an unplanned large camera shake, a scene in which the direction of a camera is suddenly changed, a scene which includes large vibration attributable to the walking of the user or shocks which the camera has received, or the like may be considered as examples of unnecessary scenes.

As a method of preventing unnecessary scenes from being recorded, a technology for detecting the acceleration of the walking of a user and allowing the start of recording if the user stops walking has been proposed (for example, refer to Patent Literature 1).

Further, a technology for, when shocks are received, preventing recording from being performed for a predetermined time thereafter has been proposed (for example, refer to Patent Literature 2).

JP 2005 348178 A discloses an imaging apparatus, an imaging method, and a program which avoid a dizzyingly changing reproduced image caused by a rapid camera-working. A shake detection circuit detects a degree of a shake of an apparatus main body at photographing of a moving picture and records the detected degree of shake to an auxiliary recording apparatus together with moving picture data. In the case of reproduction, the recorded degree of shake and the moving picture data are read and the degree of shake is compared with a prescribed value. When the degree of shake exceeds the prescribed value as a result of the comparison, the display of the moving picture on the basis of the read moving picture data together with the degree of shake is stopped.

JP 2001 154226 A provides an electronic camera apparatus capable of always performing pleasant photographing by realizing a camera shake correcting function applicable to respective photographing conditions for still picture photographing and moving picture photographing.

JP 2010 045765 A provides an apparatus that facilitates operations for repeatedly reproducing an important scene or skipping an unnecessary scene.

JP 2007 286434 A discloses a video camera with a guide display. In photographing with the video camera fixed in position, in which case tilt may be more likely to occur, the guide display is given for a smaller tilt.

JP 2005 115253 A discloses a blur correction apparatus which can perform highly precise blur correction, by considering the control sampling delay of the angular velocity sensor.

### Citation List

### Patent Literature

PTL 1: Japanese Unexamined Patent Application Publication No. 2009-267792
PTL 2: Japanese Unexamined Patent Application Publication No. 06-237463

### Summary of Invention

### Technical Problem

However, even when the technologies disclosed in the Patent Literature described above are used, there are problems as described below.

In other words, the technologies disclosed in Patent Literature 1 and Patent Literature 2 may be called configurations in which a scene which is not necessary to be reproduced is determined when photographing is performed, so that recording itself is not performed. When such a configuration is used, there is a problem in that there is a possibility that a scene which the user wants to photograph may be rejected.

Recently, attempts have been made to save the electric power of an apparatus and to increase the capacity of a recording medium, and the cost of recording data has been reduced year by year. Under such circumstances, the burden of cost is almost the same as before in both the case where an unnecessary scene is decided when photographing is performed and then the scene is not recorded and the case where the unnecessary scene is recorded first and then is cut when reproduction is performed.

Further, reference, used when a scene which is not necessary to be reproduced (for example, the amount of vibration used to determine whether to skip a scene) is specified, varies according to conditions or the permitted value of the user when photographing is performed. However, it is extremely difficult to determine the reference before photographing is performed.

In addition, there is a problem in that the conventional methods cannot respond to the automatic exclusion of a scene, in addition to the case of walking and where shocks are received.

The embodiments provide an apparatus and a method as claimed in the appended claims.

In particular, the embodiments provide an apparatus as defined in the appended set of claims. The apparatus includes a hardware processor; and a storage medium coupled to the processor. The storage medium stores instructions that, when executed by the processor, cause the apparatus to generate a motion signal indicating movement of an image recording device, over time, during generation of image data; and store the image data and the motion signal in the storage medium.

The embodiments provide a reproduction apparatus as defined in the appended set of claims. The reproduction apparatus includes a receiver configured to receive recorded image data and a motion signal having motion signal values indicating movement of an image recording device, at corresponding times, during recording of the image data. The reproduction apparatus further includes a hardware processor and a storage medium coupled to the processor.
The storage medium stores instructions that, when executed by the processor, cause the apparatus to analyze the motion signal values; designate, based on the motion signal values, at least a portion of the image data for non-display; and generate modified image data consisting of the recorded image data with the at least a portion of the image data for non-display removed.

The embodiments provide a method performed by a processing device as defined in the appended set of claims. The method includes a step of generating, by the processing device, a motion signal indicating movement of an image recording device, over time, during generation of image data. The method further includes a step of storing, in a storage medium, the image data and the motion signal.

The embodiments further provide a non-transitory computer-readable medium as defined in the appended set of claims. The non-transitory computer-readable medium stores instructions which, when executed by a computer, cause a computer to generate a motion signal indicating movement of an image recording device, over time, during generation of image data; and store, in a storage medium, the image data and the motion signal.

The embodiments further provide a method of reproducing images by a reproducing device as defined in the appended set of claims. The method includes the steps of receiving recorded image data; and receiving a motion signal indicating movement of an image recording device, during recording of the image data. The method also includes the steps of analyzing, by the reproducing device, the motion signal; designating, based on the motion signal, at least a portion of the image data for non-display; and generating modified image data consisting of the recorded image data with the at least a portion of the image data for non-display removed.

The embodiments further provide a non-transitory computer-readable medium as defined in the appended set of claims. The non-transitory computer-readable medium stores instructions which, when executed by a computer, cause the computer to receive recorded image data; receive a motion
signal indicating movement of an image recording device, during recording of the image data; analyze, by the computer, the motion signal; designate, based on the motion signal, at least a portion of the image data for non-display; and generate modified image data consisting of the recorded image data with the at least a portion of the image data for non-display removed.

### Brief Description of Drawings

[fig. 1]Fig. 1 is a block diagram illustrating an example of the configuration of a photographing apparatus to which the present technology is applied according to an embodiment.
[fig.2]Fig. 2 is a block diagram illustrating an example of the configuration of are production apparatus to which the present technology is applied according to an embodiment.
[fig.3]Fig. 3 is a graph illustrating an example of the waveform of a sensing signal which is output from a gyro sensor.
[fig.4]Fig. 4 is a view illustrating an example of a motion signal.
[fig.5]Fig. 5 is a view illustrating another example of the motion signal.
[fig.6]Fig. 6 is a view illustrating further another example of the motion signal.
[fig.7]Fig. 7 is a view illustrating still another example of the motion signal.
[fig.8]Fig. 8 is a view illustrating still another example of the motion signal.
[fig.9]Fig. 9 is a view illustrating still another example of the motion signal.
[fig.10]Fig. 10 is a view illustrating still another example of the motion signal.
[fig.11]Fig. 11 is a view illustrating still another example of the motion signal.
[fig.12]Fig. 12 is a view illustrating an example of a method of recording image data and motion data.
[fig.13]Fig. 13 is a view illustrating another example of the method of recording image data and motion data.
[fig.14]Fig. 14 is a view illustrating still another example of the method of recording image data and motion data.
[fig.15]Fig. 15 is a flowchart illustrating an example of a recording process.
[fig.16]Fig. 16 is a flowchart illustrating an example of a reproducing process.
[fig.17]Fig. 17 is a flowchart illustrating an example of a scene skip control process.
[fig.18]Fig. 18 is a view illustrating an example of the appearance of the photographing apparatus.
[fig.19]Fig. 19 is a block diagram illustrating an example of the configuration of a personal computer.

### Description of Embodiments

Hereinafter, embodiments of a technology disclosed here will be described with reference to the accompanying drawings.

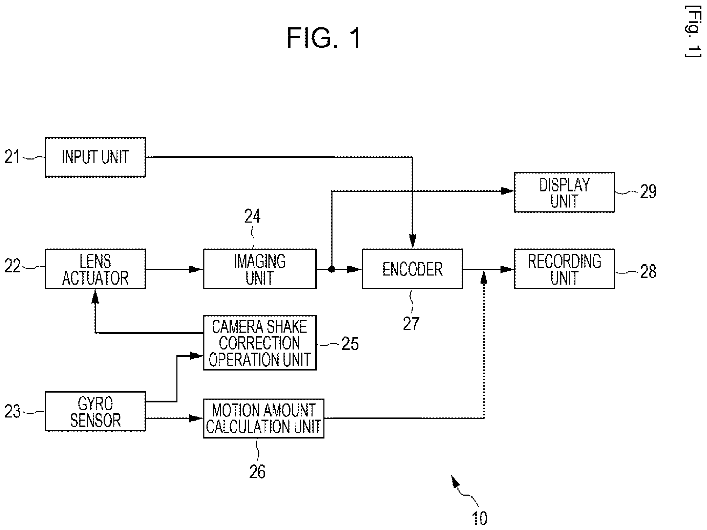

Fig. 1 is a block diagram illustrating an example of the configuration of a photographing apparatus to which the present technology is applied according to an embodiment. The photographing apparatus 10 is configured as, for example, a camcorder.

The photographing apparatus 10 shown in the drawing includes an input unit 21, a lens actuator 22, a gyro sensor 23, an imaging unit 24, a camera shake correction operation unit 25, a motion amount calculation unit 26, an encoder 27, a recording unit 28, and a display unit 29.

The input unit 21 receives, for example, input manipulated by a user. For example, manipulation, such as the start of photographing, the termination of photographing, zoom-in, zoom-out, or the like, is input by the user.

When vibration, such as a camera shake, is applied during the photographing of a video, the lens actuator 22 thereby realizes a function (camera shake correction function) of negating effect attributable to the vibration by moving a lens to the extent of the amount of applied vibration. The lens actuator 22 detects vibration, such as the camera shake, during the photographing, based on a sensing signal which is output from the gyro sensor 23 which will be described later.

The gyro sensor 23 detects and outputs the angular velocity of two axes or three axes. That is, the gyro sensor 23 senses rotations, for example, in the pitch direction, in the yaw direction, and in the roll direction, and detects the vibration of the photographing apparatus 10. The sensing signal which is output from the gyro sensor is output to the lens actuator 22 and the motion amount calculation unit 26.

The imaging unit 24 includes a sensor or the like which includes a photoelectric conversion element, for example, a Charge-Coupled Device (CCD) sensor, a Complementary Metal-Oxide Semiconductor (CMOS) sensor, or the like, and outputs a signal, which corresponds to incident light via the lens of the photographing apparatus 10, as an image signal.

The camera shake correction operation unit 25 generates a signal used to indicate the size and direction of a camera shake based on the sensing signal which is supplied from the gyro sensor 23, and outputs the generated signal to the lens actuator 22.

The motion amount calculation unit 26 generates a motion signal which is a signal indicative of the motion amount of the photographing apparatus 10, over time, during generation of image data, based on the sensing signal which is supplied from the gyro sensor 23. Meanwhile, the motion signal will be described in detail later. The motion signal which is generated by the motion amount calculation unit 26 is output to the recording unit 28, together with the output of the encoder 27 which will be described later. Here, the motion signal is output in such a way as to be associated with the regeneration time that the image data which is output from the encoder 27 is reproduced.

The encoder 27 encodes the image signal which is supplied from the imaging unit 24 using a predetermined encoding method, such as the Moving Picture Experts Group (MPEG) method or the like. The encoded image data which is output from the encoder 27 is output to the recording unit 28, together with the motion signal which is generated by the motion amount calculation unit 26.

The recording unit 28 records the image data and the motion signal in a recording medium, such as a Hard Disk Drive (HDD), a semiconductor memory card, or the like. Here, as described above, the motion signal is recorded in such a way as to be associated with the regeneration time that the image data is reproduced. Meanwhile, the motion signal is converted into digital data using any method in which, for example, the motion signal is encoded when the motion signal is recorded, and is recorded as motion data.

The display unit 29 includes a display, for example, a Liquid Crystal Display (LCD) or the like, and displays an image based on the image signal which is output from the imaging unit 24.

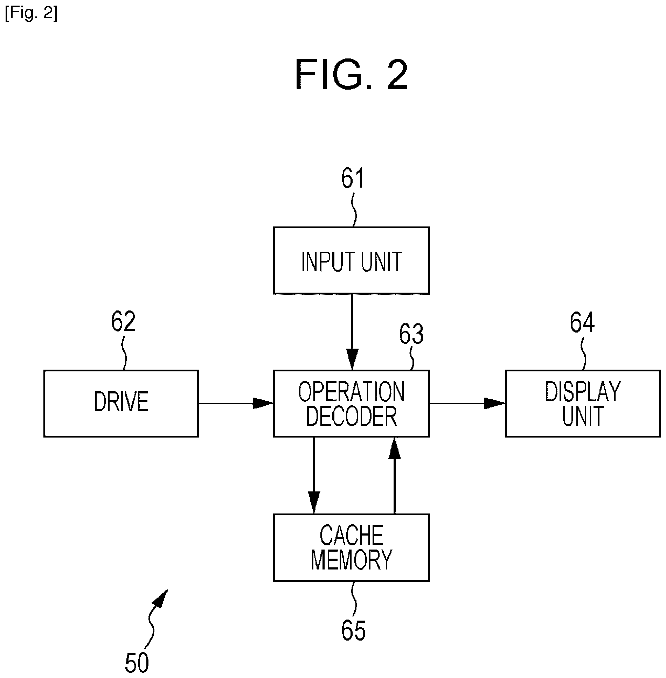

Fig. 2 is a block diagram illustrating an example of the configuration of a reproduction apparatus which corresponds to the photographing apparatus 10 in Fig. 1 and to which the present technology is applied according to an embodiment. The reproduction apparatus 50 includes, for example, an HDD recorder, a personal computer, or the like.

The reproduction apparatus 50 shown in the drawing includes an input unit 61, a drive 62, an operation decoder 63, a display unit 64, and a cache memory 65.

The input unit 61 receives, for example, an input manipulated by a user. For example, manipulation, such as an instruction related to the start of reproduction, the end of reproduction, or scene skip, is input by the user.

The drive 62 is equipped with a recording medium in which the image data and the motion data are recorded using the recording unit 28 of the photographing apparatus 10. The drive 62 reads the image data and the motion data from the recording medium based on, for example, the manipulation of the user which is input via the input unit 61. The image data and the motion data which are read from the recording medium are supplied to the operation decoder 63.

The operation decoder 63 decodes, after receiving the image data and the motion data from drive 62, for example, the image data and the motion data which are read from the recording medium, and outputs the image signal, which is obtained by performing a predetermined operation process using the cache memory 65, to the display unit 64.

The operation decoder 63 obtains and analyzes information indicative of the motion of a camcorder (camera shake, shock, large change in the direction of lens, or the like) of the video based on, for example, the motion signal which is obtained by decoding the motion data, and controls the scene skip based on the information.

For example, the operation decoder 63 stores the image data which is obtained by decoding the encoded image data in the cache memory 65. Meanwhile, the operation decoder 63 specifies a frame to be skipped with reference to the information indicative of the motion of the camcorder of the video, and then reconfigures a series of image data of the video from which the specified frame is excluded. Thereafter, the operation decoder 63 generates the image signal corresponding to the reconfigured image data and outputs the image signal to the display unit 64. Here, the operation decoder 63 determines the extent of motion or the motion period of a frame to be skipped based on, for example, the manipulation of the user which is input via the input unit 61.

The display unit 64 includes a display, for example, an LCD or the like, and displays an image corresponding to the image signal which is supplied from the operation decoder 63.

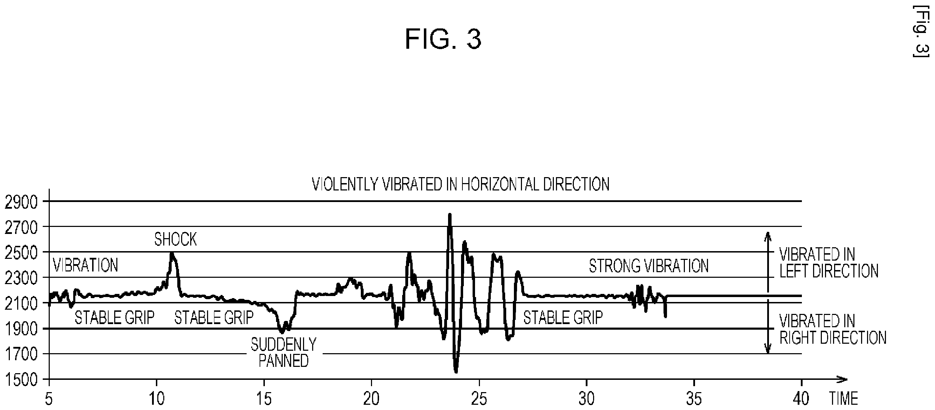

Next, the above-described motion signal will be described. Fig. 3 is a graph in which the horizontal axis thereof indicates time and the vertical axis thereof indicates a signal level and which illustrates an example of the waveform of the sensing signal which is output from the gyro sensor 23. Meanwhile, this example illustrates an example of the waveform of the rotation sensing signal of the gyro sensor 23 in the yaw direction.

The sensing signal, which is output from the gyro sensor 23 as shown in Fig. 3, may be used as the motion signal without change.

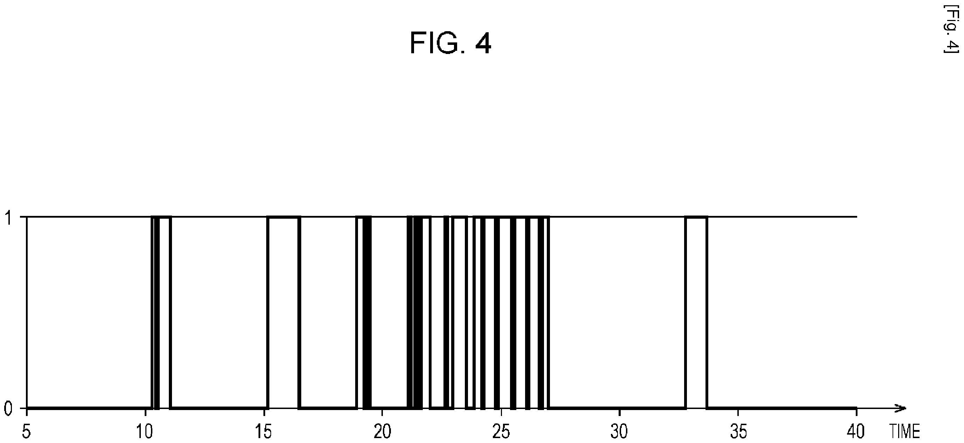

Fig. 4 is a view illustrating another example of a motion signal generated by motion amount calculation unit 26. The drawing is a graph in which the horizontal axis thereof indicates time and the vertical axis thereof indicates a signal level and which illustrates an example of the waveform of a signal which is obtained by binarizing the signal shown in Fig. 3 by performing threshold determination. In this example, the signal in Fig. 3 is binarized such that, for example, it is determined that a threshold is exceeded when the level exceeds
**±100 digit**
from a DC center value, 1 is output when a sensing signal which is larger than the threshold is output, and, otherwise, 0 is output.

As described above, it is possible to simply recognize, for example, the portion where the motion of the camcorder is large and the portion where the motion is small of the video by binarizing the sensing signal which is output from the gyro sensor 23.

As shown in Fig. 4, a signal, which is obtained by binarizing the sensing signal which is output from the gyro sensor 23 using the threshold determination, may be used as the motion signal.

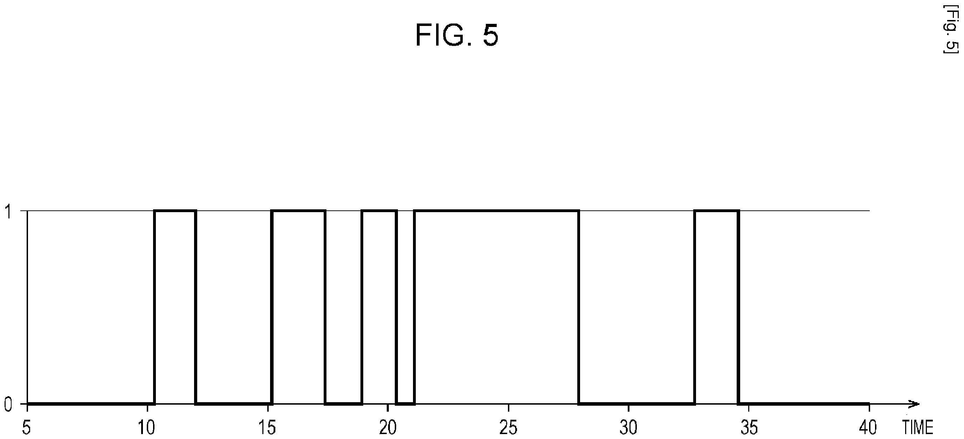

Fig. 5 is a view illustrating further another example of a motion signal generated by motion amount calculation unit 26. The drawing is a graph in which the horizontal axis thereof indicates time and the vertical axis thereof indicates a signal level and which illustrates an example of the waveform of a signal which is obtained by performing a delayed-effect process on the signal shown in Fig. 4. Here, the delayed-effect process is, for example, a process of performing a process such that, after inversion of the signal shown in Fig. 3 to 0 or 1, subsequent inversion is not permitted for a predetermined time.

For example, when the scene skip control is performed based on the signal as shown in Fig. 4, it is necessary to repeatedly determine whether to perform reproduction by a fine cycle whenever the threshold is exceeded, so that load is large when the reproduction is performed. When the delayed-effect process is performed as shown in Fig. 5, it is not necessary to repeatedly determine whether to perform reproduction by the above-described fine cycle.

As shown in Fig. 5, a signal, which is obtained by binarizing the sensing signal which is output from the gyro sensor 23 using the threshold determination and, further, performing the delayed-effect process, may be used as the motion signal.

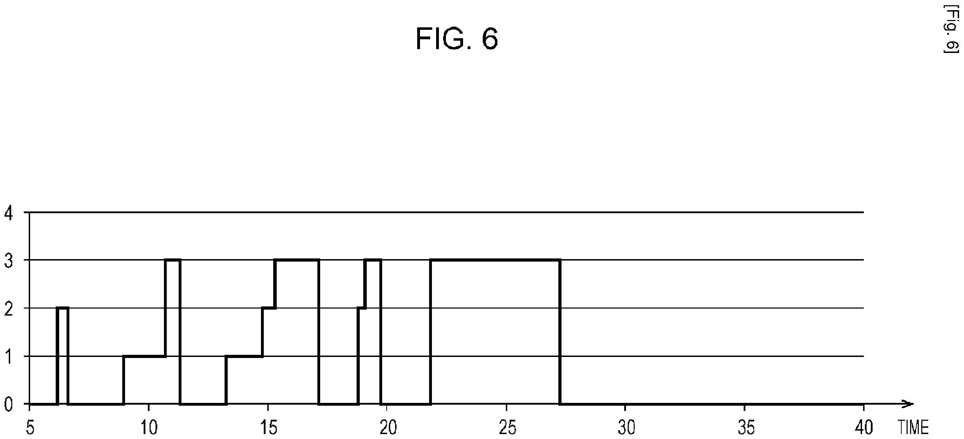

Fig. 6 is a view illustrating still another example of a motion signal generated by motion amount calculation unit 26. The drawing is a graph in which the horizontal axis thereof indicates time and the vertical axis thereof indicates a signal level and which illustrates an example of the waveform of a signal which is obtained by ternarizing the signal shown in Fig. 3 using stepwise determination with two thresholds, and, further, by performing the delayed-effect process.

For example, when the scene skip control is performed based on the signal as shown in Fig. 6, the size of a motion, which is determined that it is not necessary to be reproduced when reproduction is performed, can be selected from a plurality of sizes by providing a plurality of thresholds.

As shown in Fig. 6, a signal, which is obtained by multi-valuing the sensing signal which is output from the gyro sensor 23 using the stepwise determination with the plurality of thresholds and, further, by performing the delayed-effect process, may be used as the motion signal.

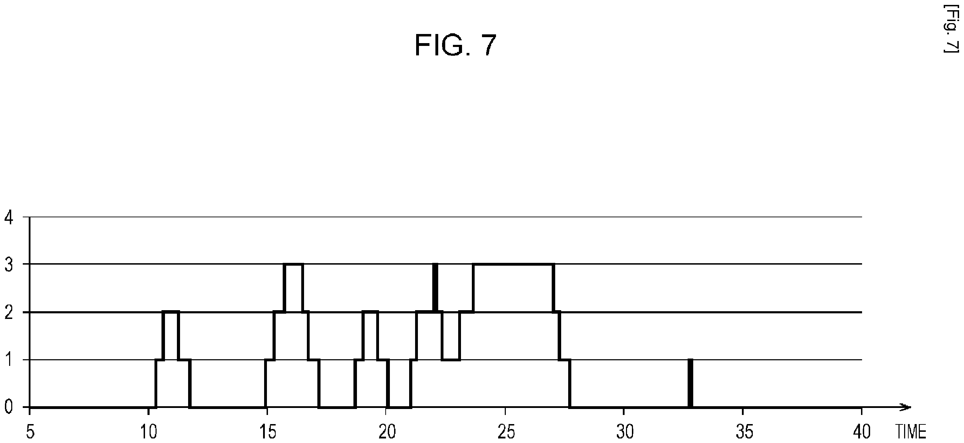

Fig. 7 is a view illustrating still another example of a motion signal generated by motion amount calculation unit 26. The drawing is a graph in which the horizontal axis thereof indicates time and the vertical axis thereof indicates a signal level and which illustrates an example of the waveform of a signal which is obtained by performing a low-pass filter process on a signal which is obtained by ternarizing the signal shown in Fig. 3 using the stepwise determination with two thresholds. That is, the low-pass filter process is performed on the signal instead of performing the delayed-effect process as the case shown in Fig. 6.

As shown in Fig. 7, a signal, which is obtained by multi-valuing the sensing signal which is output from the gyro sensor 23 using the stepwise determination with the plurality of thresholds and, further, by performing the low-pass filter process, may be used as the motion signal.

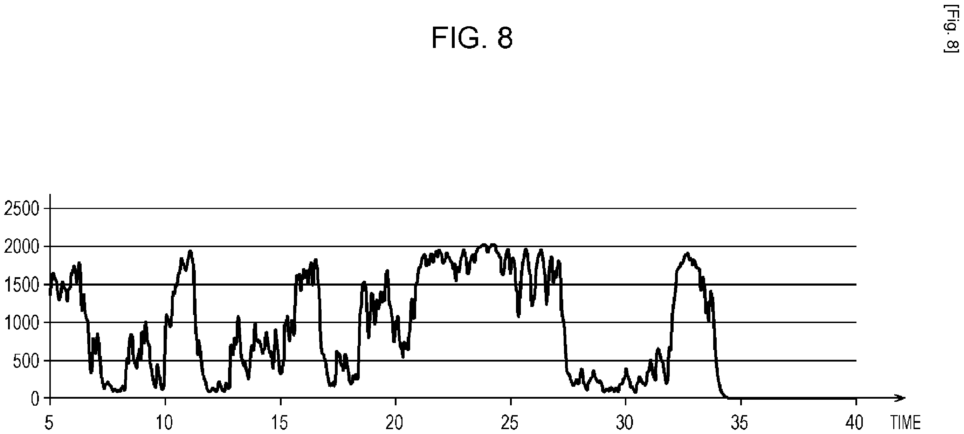

Fig. 8 is a view illustrating still another example of a motion signal generated by motion amount calculation unit 26. In the case of this example, an example of a waveform, which is obtained by calculating the area value of a power spectrum in the predetermined frequency range for each predetermined time with respect to the sensing signal which is output from the gyro sensor and projecting the area value of the power spectrum on the time axis, is shown. That is, the horizontal axis of Fig. 8 indicates time and the vertical axis thereof indicates the area of the power spectrum.

With respect to the motion signal as shown in Fig. 8, effects, for example, periodic motion, sudden strong motions, or the like can be excluded. That is, since a signal level is not high at a portion where it is not certain whether a camera shake occurred or not in a video, only a clear camera shake or shock can be recognized. The signal may be used as the motion signal.

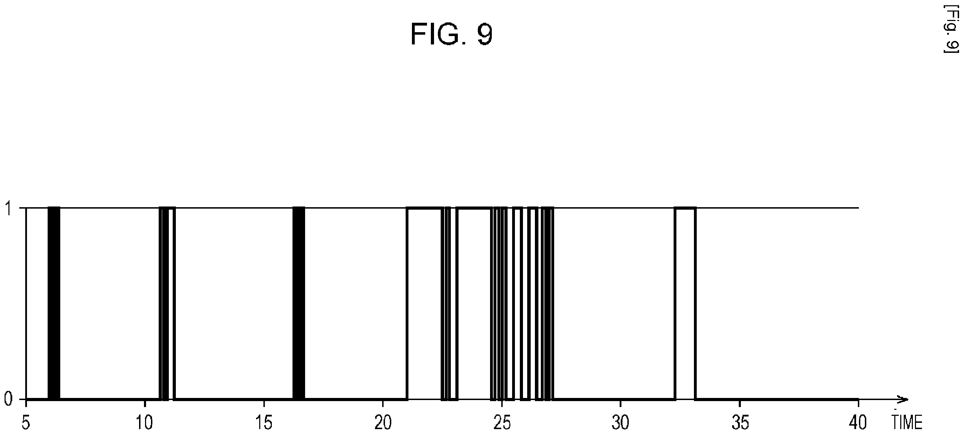

Fig. 9 is a view illustrating still another example of a motion signal generated by motion amount calculation unit 26. In the case of this example, a graph, in which the horizontal axis thereof indicates time and the vertical axis thereof indicates the level of a signal and which illustrates an example of the waveform of a signal which is obtained by binarizing the signal shown in Fig. 8 using the threshold determination, is shown. The signal may be used as the motion signal.

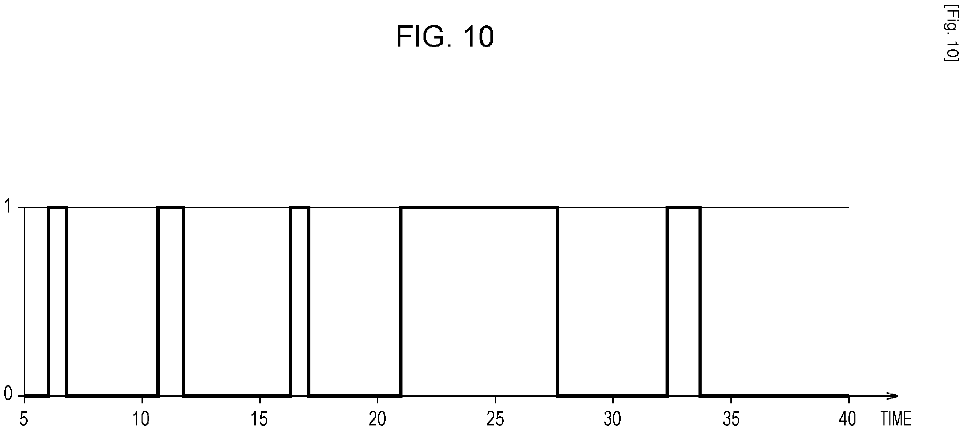

Fig. 10 is a view illustrating still another example of a motion signal generated by motion amount calculation unit 26. In the case of this example, a graph, in which the horizontal axis thereof indicates time and the vertical axis thereof indicates the level of a signal and which illustrates an example of the waveform of a signal which is obtained by performing the delayed-effect process on the signal shown in Fig. 9, is shown. The signal may be used as the motion signal.

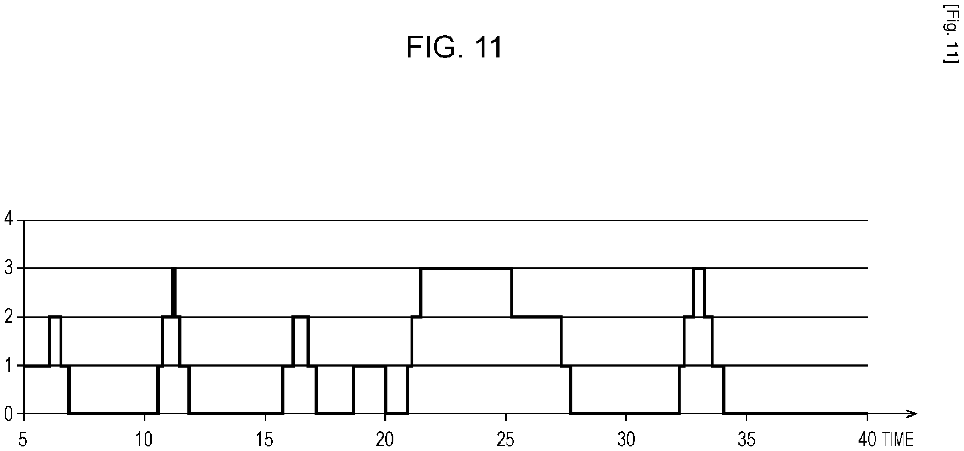

Fig. 11 is a view illustrating still another example of a motion signal generated by motion amount calculation unit 26. In the case of this example, a graph, in which the horizontal axis thereof indicates time and the vertical axis thereof indicates a signal level and which illustrates an example of the waveform of a signal which is obtained by performing the low-pass filter process on the signal which is obtained by ternarizing the signal shown in Fig. 8 using stepwise determination with two thresholds, is shown. The signal may be used as the motion signal.

Next, a method of recording the image data and the motion data will be described.

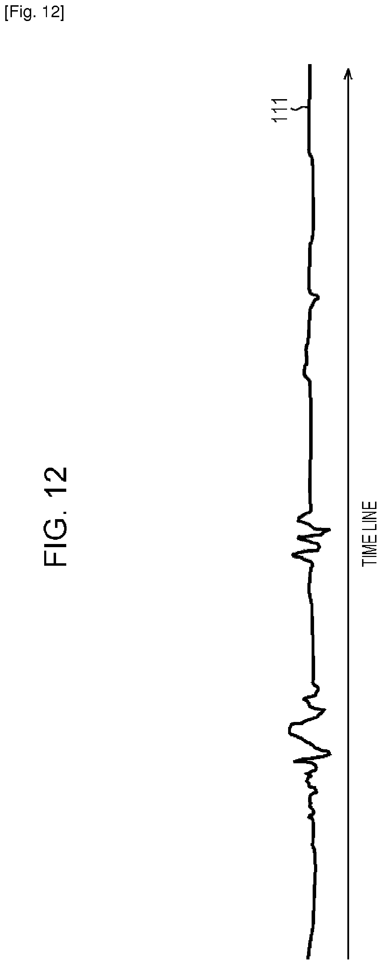

Fig. 12 is a view illustrating a method of synchronizing the waveform of the motion signal with the time line of the image data and recording the waveform of the motion signal. A synchronized waveform 111 displays, for example, the waveform of the motion signal, like the cases which were described with reference to Figs. 3 and 8. [0074]

The recording unit 28 synchronizes the waveform of the motion signal with the time line of the image data by, for example, sampling and quantizing the waveform 111, and records the waveform. Meanwhile, each value, obtained through the quantization, is filed with data which indicates time on the time line and then recorded, so that the motion data is recorded with the image data.

Therefore, for example, the motion data is reproduced by the operation decoder 63 of the reproduction apparatus 50, so that the waveform of the motion signal can be reproduced, like the cases which were described with reference to Figs. 3 and 8. In this case, for example, before the image is reproduced, the user can view the waveform 111 and perform edit, such as designation of scenes to be skipped on the time line.

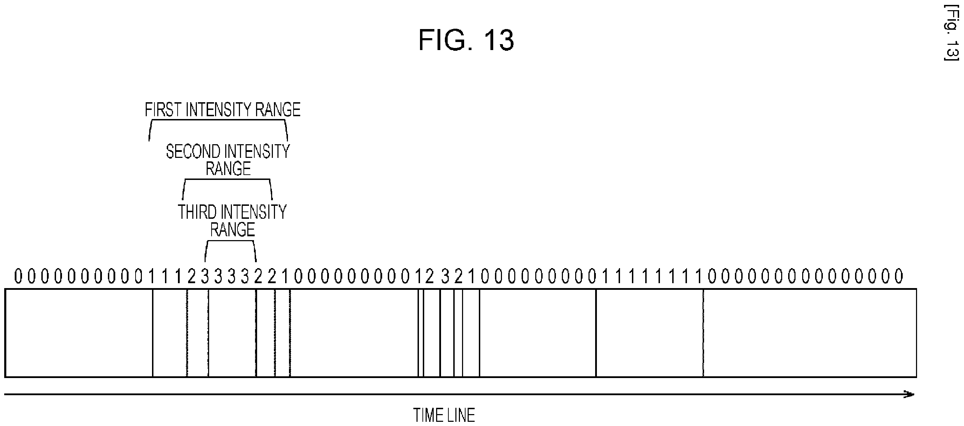

Fig. 13 is a view illustrating another example of the method of recording the image data and the motion data. The drawing illustrates an example of a case where motion size is extracted as status based on, for example, the motion signal which was multivalued (including binarization), as shown in Figs. 4 to 7 and Figs. 9 to 11, and the status is recorded for each frame of video data. In this case, for example, it is assumed that the motion signal is ternarized, and motion size is indicated as the "intensity" of a camera shake, shock or the like, and the status of first intensity to the status of third intensity are set.

As shown in Fig. 13, the status of each frame is displayed using the values 0 to 3 written on the time line. The status can be recorded by, for example, storing the status in the header of a packet included in the video data.

Further, as shown in the drawing, if color-coded (here, hatching) bars based on the status of the frame are displayed on the time line, the large camera shake (large motion) interval or the less camera shake interval of the video can be recognized at one view.

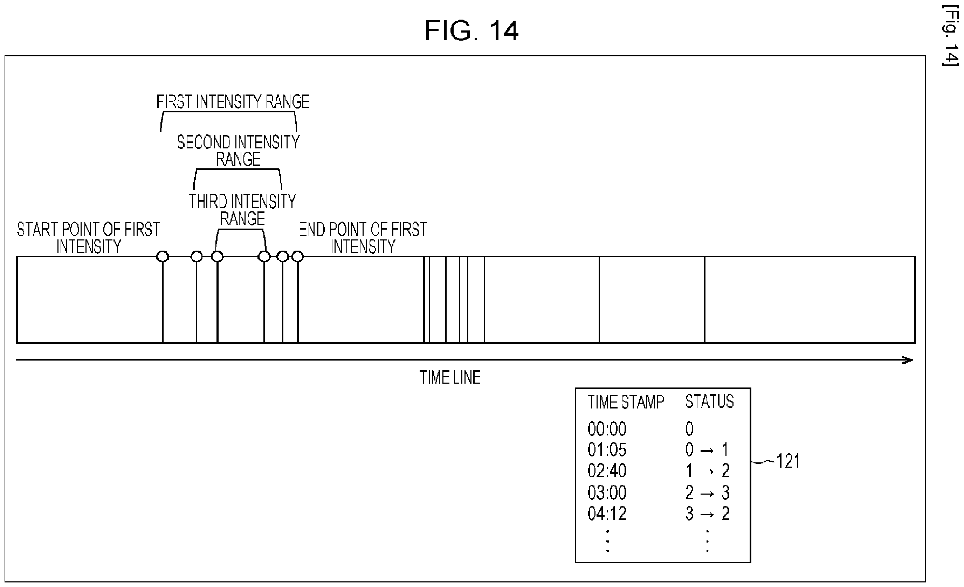

Fig. 14 is a view illustrating another example of the method of recording the image data and the motion data. Fig. 14 illustrates an example of a case where the change in motion size is extracted based on, for example, the motion signal which was multivalued (including binarization), as shown in Figs. 4 to 7 and Figs. 9 to 11, and the change in motion size is recorded as a flag which is associated with the time line of the video data. In this case, the motion data is stored with the image data by, for example, recording data 121, as shown in the lower right of Fig. 14, after filing the data 121 in which time stamp is associated with "status" which is information indicative of the change in the motion size.

According to the data 121 in Fig. 14, the facts that the motion size is "0" at time stamp "00:00" and the motion size changes from "0" to "1"
**("0→1")**
at the time stamp "01:05" are shown. Likewise, the facts that the motion size changes from "1" to "2" at the time stamp "02:40", the motion size changes from "2" to "3" at the time stamp "03:00", and the motion size changes from "3" to "2" at the time stamp "04:12",..., are shown.

For example, a scene to be skipped may be controlled by designating a scene skip start point and a scene skip end point using a flag based on the change in motion size. When the flagged motion data is recorded as described above, for example, the change point of the motion when reproduction is performed may be easily recognized and a scene skip start point and a scene skip end point can be simply identified. Further, the load of recording can be restricted to be low, compared to, for example, the case where status is recorded for each frame.

In this way, the image data and the motion data are recorded.

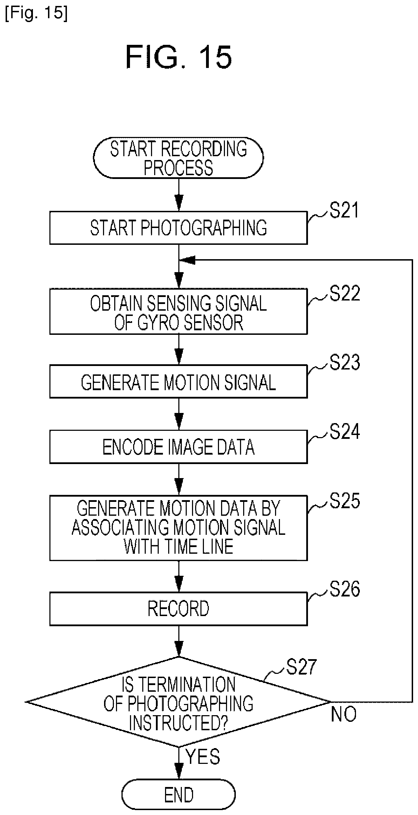

Next, an example of recording process performed by the photographing apparatus 10 in Fig. 1 will be described with reference to the flowchart of Fig. 15.

In step S21, photographing starts using the photographing apparatus 10.

In step S22, the motion amount calculation unit 26 obtains the sensing signal which is supplied from the gyro sensor 23.

In step S23, the motion amount calculation unit 26 generates the motion signal. At this time, the motion signal is generated, for example, as described above with reference to Figs. 3 to 11.

In step S24, the encoder 27 encodes the image signal which is supplied from the imaging unit 24 using a predetermined encoding method such as MPEG or the like.

Meanwhile, as described above, the motion signal which is generated in the process of step S23 is associated with a regeneration time (that is, time line) in the case where the image data which is encoded in the process of step S24 is reproduced.

In step S25, the recording unit 28 generates the motion data by digitizing the motion signal which is generated in the process of step S23 in association with the time line.

In step S26, the recording unit 28 records the image data encoded in step S24 and the motion data generated in step S25 in the recording medium. For example, a data file including the image data and the motion data is generated.

In step S27, it is determined whether the termination of photographing is instructed or not. For example, when a predetermined photographing termination manipulation is performed using the input unit 21, it is determined that the termination of photographing is instructed.

In step S27, when it is determined that the termination of photographing is not instructed, the process returns to step S22.

Meanwhile, in step S27, when it is determined that the termination of photographing is instructed, the recording process is terminated.

In this way, the recording process is performed.

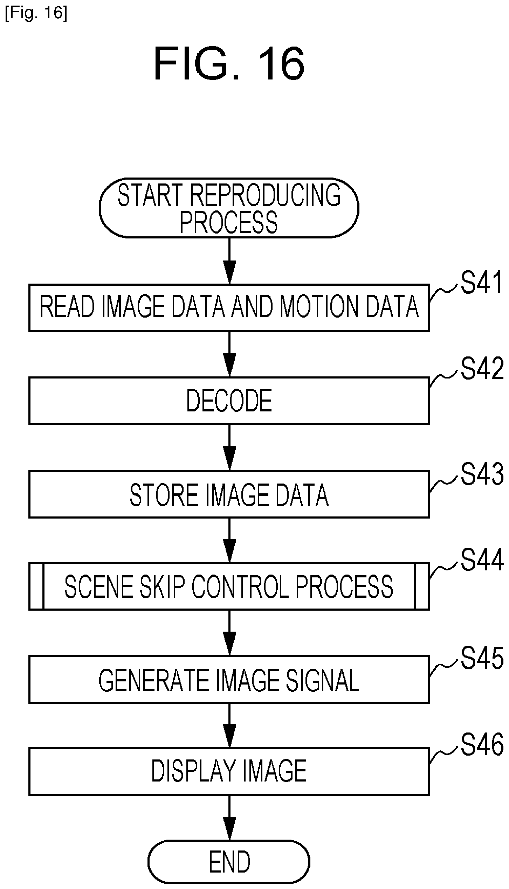

Next, an example of the reproducing process performed by the reproduction apparatus 50 in Fig. 2 will be described with reference to the flowchart in Fig. 16. Meanwhile, the process is performed by the reproduction apparatus 50 when the reproduction of video is instructed, and the recording medium, which includes data recorded as the results of the recording process which was described above with reference to Fig. 15, is mounted on the drive 62 of the reproduction apparatus 50 before the process is performed.

In step S41, the image data and the motion data are read from the recording medium which is mounted on the drive 62.

In step S42, the operation decoder 63 decodes the image data and the motion data which are read in the process of step S41.

In step S43, the cache memory 65 stores the image data which was decoded and then obtained in the process of step S42.

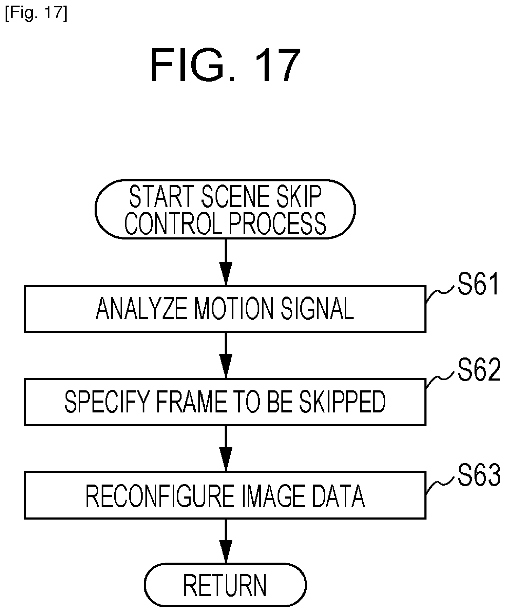

In step S44, the operation decoder 63 performs the scene skip control process which will be described later with reference to a flowchart in Fig. 17. Therefore, for example, the frame of a scene to be skipped is designated and then the image data is reconfigured.

In step S45, the operation decoder 63 generates the image signal corresponding to the image data which was reconfigured in accordance with the process of step S44.

In step S46, the display unit 64 displays an image corresponding to the image signal which was generated in the process of step S45.

In this way, the reproducing process is performed. [0103]

Next, an example of the scene skip control process in step S44 of Fig. 16 will be described in detail with reference to the flowchart in Fig. 17.

In step S61, the operation decoder 63 analyzes the motion signal obtained based on the motion data. Therefore, for example, information (camera shake, shock, large change in the direction of lens, or the like) indicative of the motion of a camcorder of the video is obtained.

In step S62, the operation decoder 63 specifies a frame to be skipped based on the results of the analysis in step S61.

Here, a user designates a scene to be skipped by displaying, for example, the time line and the motion signal as shown in Fig. 12 on the display unit 64, so that a frame which configures the scene is specified as a frame to be skipped.

Further, for example, when the status of each frame is recorded as shown in Fig. 13, the frame of preset status is specified as the frame to be skipped. For example, when setting is made such that the determination reference of the frame to be skipped is equal to or greater than first status, the frames of the first status to third status are determined to be the frames to be skipped. Further, for example, when setting is made such that the determination reference of the frame to be skipped is equal to or greater than the second status, the frames of the second status to the third status are determined to be the frames to be skipped. In addition, for example, when setting is made such that the determination reference of the frame to be skipped is equal to or greater than the third status, the frame of the third status is determined to be the frame to be skipped.

Further, for example, when flagged motion data is recorded as shown in Fig. 14, a frame within an interval designated by the user is specified as the frame to be skipped based on the flag.

In step S63, the operation decoder 63 reconfigures a series of image data of the video excluding the frames specified in the process of step S62. Therefore, the scenes including, for example, a camera shake, shock, the large change in the direction of lens, or the like are skipped and the video is reproduced.

In this way, the scene skip control process is performed.

As described above, according to the present technology, the motion data is recorded in association with the time line when photographing (recording) is performed, and a predetermined scene is skipped based on the motion data when reproduction is performed.

Conventionally, for example a technology for detecting the acceleration of the walking of a user and allowing the start of recording if the user stops walking and a technology for, when shocks are received, preventing recording from being performed for a predetermined time thereafter have been proposed.

However, in other words, the technologies may be called configurations in which a scene which is not necessary to be reproduced is determined when photographing is performed, so that recording itself is not performed. When such a configuration is used, there is a problem in that there is a possibility that a scene which the user wants to photograph may be rejected.

Further, recently, attempts have been made to save the electric power of an apparatus and to increase the capacity of a recording medium, and the cost of recording data has been reduced year by year. Under such a circumstance, the burden of cost is almost the same as before in both a case where an unnecessary scene is determined when photographing is performed and then the scene is not recorded and a case where the unnecessary scene is recorded first and then is cut when reproduction is performed.

Further, reference, used when a scene which is not necessary to be reproduced (for example, the amount of vibration used to determine whether to skip a scene) is specified, varies according to conditions or the permitted value of the user when photographing is performed. However, it is extremely difficult to determine the reference before photographing is performed.

On the other hand, according to the present technology, all scenes are recorded when photographing is performed and an unnecessary scene is specified when reproducing is performed, so that, for example, a scene which the user wants to photograph is not rejected.

Further, a scene to be skipped can be specified based on, for example, status which is associated with a time line, so that it is able to flexibly respond to a reference which differs according to a condition when photographing is performed and the permitted value of the user.

Further, even in the case of a scene which is generally regarded that it is not necessary to be reproduced because of a large camera shake, the scene may be a precious memory for a user when, for example, the scene is photographed by a small child, so that such a scene is not completely cut and can be preserved. Therefore, according to the present technology, all the memories of the user can be recorded.

Further, if reference, which is used to determine a scene which is not necessary to be reproduced, is set, the scene can be automatically skipped.

Therefore, according to the present technology, whether to reproduce a recorded image or not can be more freely decided.

Hereinbefore, an example in which the motion signal is generated based on the sensing signal of the gyro sensor 23 has been described. However, the motion signal may be generated based on, for example, a sensing signal output from an acceleration sensor.

In this way, a frame which is photographed when a camera faces down can be specified using, for example, an acceleration sensor as an inclination sensor, which refers to the vector direction of gravitation, in addition to motion, such as a camera shake, shock, or the like. When, for example, the user forgets to press a termination button after the photographing is terminated, there is a case where the images of ground are continuously photographed while a camera faces downward. If a motion signal is generated based on the sensing signal output from the acceleration sensor and motion data is recorded in association with a time line, a scene which is photographed while the camera faces downward can be skipped.

Further, an image sensor may be mounted on the photographing apparatus 10, and sensor data obtained based on a sensing signal output from the image sensor may be recorded in association with the time line.

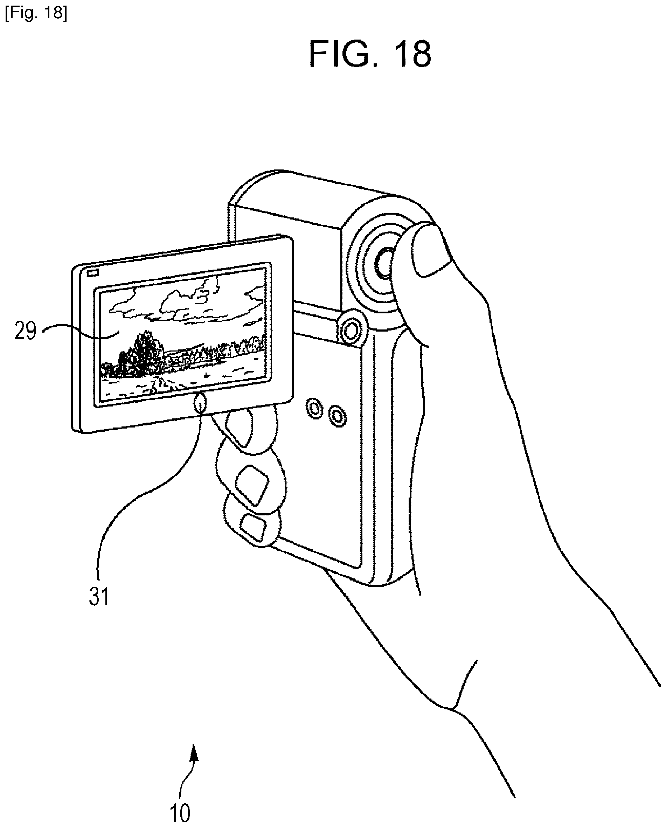

Fig. 18 is a view illustrating an example of the appearance of the photographing apparatus 10. The drawing shows an example of the appearance of the photographing apparatus 10 viewed from the side of an observer, and, in this case, an object is present on the slightly left side of a space in the depth direction. As shown in the drawing, the image sensor 31 is provided, for example, in the lower part of the display of the display unit 29 which displays an image toward a photographer.

The image sensor 31 includes, for example, a compact CCD camera, and recognizes the facial image of a photographed image. That is, for example, a sensing signal used to indicate whether the face of the user is recognized is output by the image sensor 31. Therefore, for example, a frame obtained when the user performs photographing while looking at the direction of the object can be specified.

Generally, when an image is photographed, the user performs photographing toward the direction of the object. Meanwhile, for example, when the user forgets to press a termination button after photographing is terminated, it is conceivable that the user does not look at the direction of the object. That is, it is conceivable that it is highly worthy of reproducing the image of a frame which is photographed when the face of the user is recognized by the image sensor 31. However, it is conceivable that it is less worthy of reproducing the image of a frame which is photographed when the face of the user is not recognized by the image sensor 31.

As described above, if the sensor data, obtained based on the sensing signal output from the image sensor 31, is recorded in association with the time line, it is possible to simply determine a scene which is not necessary to be reproduced after all. Further, if a scene which is not necessary to be reproduced is determined using the sensor data while a scene to be skipped is determined based on the above-described motion data, it is possible to more effectively and automatically skip the scene.

That is, it is not necessary that information, which is recorded in association with the time line in the present technology, is not necessarily information indicative of motion, and may be various types of incidental information such as data sensed by a predetermined sensor.

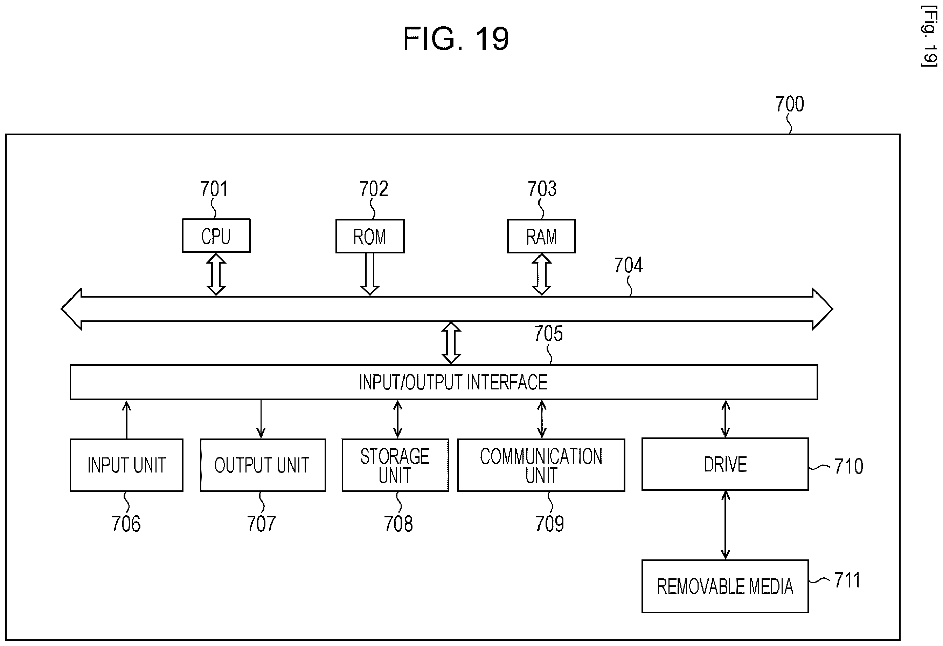

Meanwhile, the above-described series of processes can be performed using hardware and can be performed using software. When the above-described series of processes are performed using software, a program which configures the software is installed in a computer provided with dedicated hardware, or, for example, a general-purpose personal computer 700, as shown in Fig. 19, which is capable of performing various types of functions by installing various types of programs from a network or a recording medium (i.e., a non-transitory recording medium) storing the software program.

In Fig. 19, a Central Processing Unit (CPU) 701 executes various types of processes according to a program which is stored in a Read Only Memory (ROM) 702 or a program which is loaded in a Random Access Memory (RAM) 703 from a storage unit 708. Further, the RAM 703 appropriately stores data or the like which is necessary when the CPU 701 executes the various types of processes.

The CPU 701, the ROM 702, and the RAM 703 are connected to each other via a bus 704. Further, an input/output interface 705 is connected to the bus 704.

The input/output interface 705 is connected to the input unit 706 which includes a keyboard, a mouse, or the like, an output unit 707 which includes a display such as a Liquid Crystal Display (LCD), a speaker or the like, a storage unit 708 which includes a hard disk or the like, and a communication unit 709 which includes a network interface card such as a modem, a Local Area Network (LAN) card, or the like. The communication unit 709 processes a communication process via a network which includes the Internet.

A drive 710 is connected to the input/output interface 705 as necessary, and a removable media 711, such as a magnetic disk, an optical disc, a magneto-optical disc, a semiconductor memory or the like, is appropriately mounted thereon. A computer program which is read from the drive 710 and the removable media 711 is installed in the storage unit 708.

When the above-described series of processes are performed by software, a program which configures the software is installed from a network, such as the Internet or the like, or a recording medium which includes the removable media 711 or the like.

Meanwhile, in addition to the main body of the apparatus shown in Fig. 19, the recording medium includes not only the removable media 711 which includes a magnetic disc (including a floppy disc (registered trademark)), an optical disc (including a Compact Disk-Read Only Memory (CD-ROM) and a Digital Versatile Disc (DVD)), a magneto-optical disc (including a Mini-Disk (MD, registered trademark)), a semiconductor memory or the like, which are distributed to deliver a program to the user and in which the program is recorded, but also a hard disc which is included in the ROM 702 or the storage unit 708 which is delivered to the user while being built in the main body of the apparatus in advance and in which a program is recorded.

Meanwhile, the above-described series of processes in the present specification include processes which are performed in temporal sequence along the written order and processes which are performed in parallel or individually even though the processes are not always processed in temporal sequence.

Further, the embodiment of the present technology is not limited to the above-described embodiment and various modifications are possible in the range which does not depart from the gist of the present technology.

Additionally, the present technology may also be configured as below.
(1) An apparatus comprising:
   a hardware processor; and
   a storage medium coupled to the processor and storing instructions that, when executed by the processor, cause the apparatus to:
      generate a motion signal indicating movement of an image recording device, over time, during generation of image data; and
      store the image data and the motion signal in the storage medium.
(2) The apparatus according to (1), further comprising a gyro sensor.
(3) The apparatus according to (1) or (2), further comprising an acceleration sensor.
(4) The apparatus according to any one of (1) to (3), further comprising an image detection unit configured to detect a facial image in the image data.
(5) The apparatus according to any one of (1) to (4), wherein the processor is configured to generate, from the motion signal, a first processed signal having a plurality of first processed signal values at points in time, the first processed signal values corresponding to one of a predetermined number of threshold values.
(6) The apparatus according to (5), wherein the processor is configured to generate a second processed signal having second processed signal values, the second processed signal values:
   corresponding to the value of the first processed signal at a corresponding point in time, under occurrence of a first condition; and
   corresponding to the value of the first processed signal at an earlier point in time, upon occurrence of a second condition.
(7) The apparatus according to (5) or (6), wherein the processor is configured to generate the first processed signal by applying a low-pass filter to the motion signal.
(8) The apparatus according to any one of (5) to (7), wherein the processor is configured to designate flags on the first processed signal based on the threshold values.
(9) The apparatus according to any one of (1) to (7), further comprising:
   a display unit configured to display the images.
(10) A reproduction apparatus comprising:
   a receiver configured to receive:
      recorded image data; and
      a motion signal having motion signal values indicating movement of an image recording device, at corresponding times, during recording of the image data; and
      a hardware processor; and
      a storage medium coupled to the processor and storing instructions that, when executed by the processor, cause the apparatus to:
         analyze the motion signal values;
         designate, based on the motion signal values, at least a portion of the image data for non-display; and
         generate modified image data consisting of the recorded image data with the at least a portion of the image data for non-display removed.
(11) The apparatus according to (10), wherein:
   the motion signal values comprise a first value corresponding to motion of the image recording device at first points in time, and a second value corresponding to motion of the image recording device at second points in time, the first value being different from the second value;
   the processor is configured to designate the at least a portion of the image data for non-display, in accordance with the motion signal values.
(12) The apparatus according to (10) or (11), wherein:
   the motion signal is divided into segments by flags having flag values indicative of transitions of the motion signal between motion signal values; and
   the processor is configured to designate the at least a portion of the image data for non-display in accordance with the flag values.
(13) The apparatus according to any one of (10) to (12), further comprising:
   a display unit configured to display the modified image data.

### Reference Signs List

Meanwhile, the present technology can include one or more of the following configurations.
- 10: photographing apparatus
- 21: input unit
- 22: lens actuator
- 23: gyro sensor
- 24: imaging unit
- 25: camera shake correction operation unit
- 26: motion amount calculation unit
- 27: encoder
- 28: recording unit
- 29: display unit
- 50: reproduction apparatus
- 61: input unit
- 62: drive
- 63: operation decoder
- 64: display unit
- 65: cache memory

## Claims

1. An apparatus comprising:
a hardware processor; and
a storage medium coupled to the processor and storing instructions that, when executed by the processor, cause the apparatus to:
generate a motion signal indicating movement of an image recording device, over time, during generation of image data,
perform a delayed-effect process on the motion signal, the delayed-effect process comprising performing a process such that, after modification of the motion signal, subsequent modification is not permitted for a predetermined period of time; and
store the image data and the processed motion signal in the storage medium.

2. The apparatus according to claim 1, further comprising at least one of a gyro sensor and an acceleration sensor.

3. The apparatus according to claim 1 or claim 2, further comprising an image detection unit configured to detect a facial image in the image data.

4. The apparatus according to any of claims 1 to 3, wherein the processor is configured to generate, from the motion signal, a first processed signal having a plurality of first processed signal values at points in time, the first processed signal values corresponding to one of a predetermined number of threshold values.

5. The apparatus according to claim 4, wherein the processor is configured to generate a second processed signal having second processed signal values, the second processed signal values:
corresponding to the value of the first processed signal at a corresponding point in time, under occurrence of a first condition; and
corresponding to the value of the first processed signal at an earlier point in time, upon occurrence of a second condition.

6. The apparatus according to claim 4 or claim 5, wherein the processor is configured to generate the first processed signal by applying a low-pass filter to the motion signal.

7. The apparatus according to any of claims 4 to 6, wherein the processor is configured to designate flags on the first processed signal based on the threshold values.

8. The apparatus according to claim 1, further comprising:
a display unit configured to display the images.

9. A reproduction apparatus comprising:
a receiver configured to receive:
recorded image data; and
a motion signal having motion signal values indicating movement of an image recording device, at corresponding times, during recording of the image data; and
a hardware processor; and
a storage medium coupled to the processor and storing instructions that, when executed by the processor, cause the apparatus to:
analyze the motion signal values;
designate, based on the motion signal values, at least a portion of the image data for non-display; and
generate modified image data consisting of the recorded image data with the at least a portion of the image data for non-display skipped.

10. The apparatus according to claim 9, wherein:
the motion signal values comprise a first value corresponding to motion of the image recording device at first points in time, and a second value corresponding to motion of the image recording device at second points in time, the first value being different from the second value;
the processor is configured to designate the at least a portion of the image data for non-display, in accordance with the motion signal values.

11. The apparatus according to any of claims 9 and 10, wherein:
the motion signal is divided into segments by flags having flag values indicative of transitions of the motion signal between motion signal values; and
the processor is configured to designate the at least a portion of the image data for non-display in accordance with the flag values.

12. A method performed by a processing device, comprising:
generating, by the processing device, a motion signal indicating movement of an image recording device, over time, during generation of image data;
performing a delayed-effect process on the motion signal, the delayed-effect process comprising performing a process such that, after modification of the motion signal, subsequent modification is not permitted for a predetermined period of time; and
storing, in a storage medium:
the image data; and
the motion signal.

13. A non-transitory computer-readable medium storing instructions which, when executed by a computer, cause the computer to:
generate, by the computer, a motion signal indicating movement of an image recording device, over time, during generation of image data;
perform a delayed-effect process on the motion signal, the delayed-effect process comprising performing a process such that, after modification of the motion signal, subsequent modification is not permitted for a predetermined period of time; and
store, in a storage medium:
the image data; and
the motion signal.

14. A method of reproducing images by a reproducing device, comprising:
receiving recorded image data;
receiving a motion signal indicating movement of an image recording device, during recording of the image data;
analyzing, by the reproducing device, the motion signal;
designating, based on the motion signal, at least a portion of the image data for non-display; and
generating modified image data consisting of the recorded image data with the at least a portion of the image data for non-display skipped.

15. A non-transitory computer-readable medium storing instructions which, when executed by a computer, cause the computer to:
receive recorded image data;
receive a motion signal indicating movement of an image recording device, during recording of the image data;
analyze, by the computer, the motion signal;
designate, based on the motion signal, at least a portion of the image data for non-display; and
generate modified image data consisting of the recorded image data with the at least a portion of the image data for non-display skipped.

## Patentansprüche

1. Vorrichtung, welche Folgendes umfasst:
einen Hardware-Prozessor; und
ein Speichermedium, das mit dem Prozessor verbunden ist und Befehle speichert, die, wenn sie durch den Prozessor ausgeführt werden, die Vorrichtung zu Folgendem veranlassen:
Erzeugen eines Bewegungssignals, das eine Bewegung eines Bildaufzeichnungsgerätes, im Zeitablauf, während der Erzeugung von Bilddaten angibt,
Durchführen eines Verzögerungseffekt-Prozesses an dem Bewegungssignal, wobei der Verzögerungseffekt-Prozess das Durchführen eines Prozesses umfasst, derart, dass, nach einer Modifikation des Bewegungssignals, für einen vorbestimmten Zeitraum keine nachfolgende Modifikation zugelassen wird; und
Speichern der Bilddaten und des verarbeiteten Bewegungssignals in dem Speichermedium.

2. Vorrichtung nach Anspruch 1, welche ferner mindestens einen aus einem Gyrosensor und einem Beschleunigungssensor umfasst.

3. Vorrichtung nach Anspruch 1 oder 2, welche ferner eine Bilderkennungseinheit umfasst, die konfiguriert ist zum Erkennen eines Gesichtsbildes in den Bilddaten.

4. Vorrichtung nach einem der Ansprüche 1 bis 3, wobei der Prozessor konfiguriert ist zum Erzeugen, aus dem Bewegungssignal, eines ersten verarbeiteten Signals mit mehreren ersten verarbeiteten Signalwerten zu Zeitpunkten, wobei die ersten verarbeiteten Signalwerte einem von einer vorbestimmten Zahl von Schwellenwerten entsprechen.

5. Vorrichtung nach Anspruch 4, wobei der Prozessor konfiguriert ist zum Erzeugen eines zweiten verarbeiteten Signals mit zweiten verarbeiteten Signalwerten, wobei die zweiten verarbeiteten Signalwerte:
dem Wert des ersten verarbeiteten Signals zu einem entsprechenden Zeitpunkt, bei Eintritt einer ersten Bedingung, entsprechen; und
dem Wert des ersten verarbeiteten Signals zu einem früheren Zeitpunkt, bei Eintritt einer zweiten Bedingung, entsprechen.

6. Vorrichtung nach Anspruch 4 oder 5, wobei der Prozessor konfiguriert ist zum Erzeugen des ersten verarbeiteten Signals durch Anwendung eines Tiefpassfilters auf das Bewegungssignal.

7. Vorrichtung nach einem der Ansprüche 4 bis 6, wobei der Prozessor konfiguriert ist zum Bestimmen von Merkern in dem ersten verarbeiteten Signal basierend auf den Schwellenwerten.

8. Vorrichtung nach Anspruch 1, welche ferner Folgendes umfasst:
eine Anzeigeeinheit, die konfiguriert ist zum Anzeigen der Bilder.

9. Wiedergabevorrichtung, welche Folgendes umfasst:
einen Empfänger, der dazu konfiguriert ist, Folgendes zu empfangen:
aufgezeichnete Bilddaten; und
ein Bewegungssignal, das Bewegungssignalwerte aufweist, die eine Bewegung eines Bildaufzeichnungsgerätes, zu entsprechenden Zeiten, während der Aufzeichnung der Bilddaten angibt; und
einen Hardware-Prozessor; und
ein Speichermedium, das mit dem Prozessor verbunden ist und Befehle speichert, die, wenn sie durch den Prozessor ausgeführt werden, die Vorrichtung zu Folgendem veranlassen:
Analysieren der Bewegungssignalwerte;
Bestimmen, basierend auf den Bewegungssignalwerten, mindestens eines Abschnitts der Bilddaten zur Nicht-Anzeige; und
Erzeugen modifizierter Bilddaten bestehend aus den aufgezeichneten Bilddaten, wobei der mindestens eine Abschnitt der Bilddaten zur Nicht-Anzeige ausgelassen wird.

10. Vorrichtung nach Anspruch 9, wobei:
die Bewegungssignalwerte einen ersten Wert, der einer Bewegung des Bildaufzeichnungsgerätes zu ersten Zeitpunkten entspricht, und einen zweiten Wert, der einer Bewegung des Bildaufzeichnungsgerätes zu zweiten Zeitpunkten entspricht, wobei sich der erste Wert von dem zweiten Wert unterscheidet, umfassen;
der Prozessor konfiguriert ist zum Bestimmen des mindestens einen Abschnitts der Bilddaten zur Nicht-Anzeige in Übereinstimmung mit den Bewegungssignalwerten.

11. Vorrichtung nach einem der Ansprüche 9 und 10, wobei:
das Bewegungssignal durch Merker, die Merkerwerte aufweisen, die indikativ für Übergänge des Bewegungssignals zwischen Bewegungssignalwerten sind, in Segmente unterteilt wird; und
der Prozessor konfiguriert ist zum Bestimmen des mindestens einen Abschnitts der Bilddaten zur Nicht-Anzeige in Übereinstimmung mit den Merkerwerten.

12. Verfahren, das durch ein Verarbeitungsgerät durchgeführt wird, welches Folgendes umfasst:
Erzeugen, durch das Verarbeitungsgerät, eines Bewegungssignals, das eine Bewegung eines Bildaufzeichnungsgerätes, im Zeitablauf, während der Erzeugung von Bilddaten angibt;
Durchführen eines Verzögerungseffekt-Prozesses an dem Bewegungssignal, wobei der Verzögerungseffekt-Prozess das Durchführen eines Prozesses umfasst, derart, dass, nach einer Modifikation des Bewegungssignals, für einen vorbestimmten Zeitraum keine nachfolgende Modifikation zugelassen wird; und
Speichern, in einem Speichermedium:
der Bilddaten; und
des Bewegungssignals.

13. Nichttransitorisches computerlesbares Medium, das Befehle speichert, welche, wenn sie durch einen Computer ausgeführt werden, den Computer zu Folgendem veranlassen:
Erzeugen, durch den Computer, eines Bewegungssignals, das eine Bewegung eines Bildaufzeichnungsgerätes, im Zeitablauf, während der Erzeugung von Bilddaten angibt;
Durchführen eines Verzögerungseffekt-Prozesses an dem Bewegungssignal, wobei der Verzögerungseffekt-Prozess das Durchführen eines Prozesses umfasst, derart, dass, nach einer Modifikation des Bewegungssignals, für einen vorbestimmten Zeitraum keine nachfolgende Modifikation zugelassen wird; und
Speichern, in einem Speichermedium:
der Bilddaten; und
des Bewegungssignals.

14. Verfahren zur Wiedergabe von Bildern durch ein Wiedergabegerät, welches Folgendes umfasst:
Empfangen aufgezeichneter Bilddaten;
Empfangen eines Bewegungssignals, das eine Bewegung eines Bildaufzeichnungsgerätes während der Aufzeichnung der Bilddaten angibt;
Analysieren, durch das Wiedergabegerät, des Bewegungssignals;
Bestimmen, basierend auf dem Bewegungssignal, mindestens eines Abschnitts der Bilddaten zur Nicht-Anzeige; und
Erzeugen modifizierter Bilddaten bestehend aus den aufgezeichneten Bilddaten, wobei der mindestens eine Abschnitt der Bilddaten zur Nicht-Anzeige ausgelassen wird.

15. Nichttransitorisches computerlesbares Medium, das Befehle speichert, welche, wenn sie durch einen Computer ausgeführt werden, den Computer zu Folgendem veranlassen:
Empfangen aufgezeichneter Bilddaten;
Empfangen eines Bewegungssignals, das eine Bewegung eines Bildaufzeichnungsgerätes während der Aufzeichnung der Bilddaten angibt;
Analysieren, durch den Computer, des Bewegungssignals;
Bestimmen, basierend auf dem Bewegungssignal, mindestens eines Abschnitts der Bilddaten zur Nicht-Anzeige; und
Erzeugen modifizierter Bilddaten bestehend aus den aufgezeichneten Bilddaten, wobei der mindestens eine Abschnitt der Bilddaten zur Nicht-Anzeige ausgelassen wird.

## Revendications

1. Appareil comprenant :
un processeur matériel ; et
un support de stockage couplé au processeur et stockant des instructions qui, lorsqu'elles sont exécutées par le processeur, contraignent l'appareil à :
générer un signal de mouvement indiquant un mouvement d'un dispositif d'enregistrement d'image, au fil du temps, pendant une génération de données d'image,
réaliser un traitement à effet différé sur le signal de mouvement, le traitement à effet différé consistant à réaliser un traitement de telle sorte que, après une modification du signal de mouvement, une modification ultérieure ne soit pas permise pendant une période de temps prédéterminée ; et
stocker les données d'image et le signal de mouvement traité dans le support de stockage.

2. Appareil selon la revendication 1, comprenant en outre un capteur gyroscopique et/ou un capteur d'accélération.

3. Appareil selon la revendication 1 ou la revendication 2, comprenant en outre une unité de détection d'image configurée pour détecter une image faciale dans les données d'image.

4. Appareil selon l'une quelconque des revendications 1 à 3, dans lequel le processeur est configuré pour générer, à partir du signal de mouvement, un premier signal traité ayant une pluralité de premières valeurs de signal traité à des moments dans le temps, les premières valeurs de signal traité correspondant à une valeur de seuil d'un nombre prédéterminé de valeurs de seuil.

5. Appareil selon la revendication 4, dans lequel le processeur est configuré pour générer un second signal traité ayant des secondes valeurs de signal traité, les secondes valeurs de signal traité :
correspondant à la valeur du premier signal traité à un moment correspondant dans le temps lors de la survenue d'une première condition ; et
correspondant à la valeur du premier signal traité à un moment plus tôt dans le temps lors de la survenue d'une seconde condition.

6. Appareil selon la revendication 4 ou la revendication 5, dans lequel le processeur est configuré pour générer le premier signal traité en appliquant un filtre passe-bas au signal de mouvement.

7. Appareil selon l'une quelconque des revendications 4 à 6, dans lequel le processeur est configuré pour désigner des indicateurs sur le premier signal traité en se basant sur les valeurs de seuil.

8. Appareil selon la revendication 1, comprenant en outre :
une unité d'affichage configurée pour afficher les images.

9. Appareil de reproduction comprenant :
un récepteur configuré pour recevoir :
des données d'image enregistrées ; et
un signal de mouvement ayant des valeurs de signal de mouvement indiquant un mouvement d'un dispositif d'enregistrement d'image, à des moments correspondants, pendant un enregistrement des données d'image ; et
un processeur matériel ; et
un support de stockage couplé au processeur et stockant des instructions qui, lorsqu'elles sont exécutées par le processeur, contraignent l'appareil à :
analyser les valeurs de signal de mouvement ;
indiquer, en se basant sur les valeurs de signal de mouvement, au moins une partie des données d'image qui ne doivent pas être affichées ; et
générer des données d'image modifiées se composant des données d'image enregistrées, la ou les parties des données d'image qui ne doivent pas être affichées étant omises.

10. Appareil selon la revendication 9, dans lequel :
les valeurs de signal de mouvement comprennent une première valeur correspondant à un mouvement du dispositif d'enregistrement d'image à des premiers moments dans le temps, et une seconde valeur correspondant à un mouvement du dispositif d'enregistrement d'image à des seconds moments dans le temps, la première valeur étant différente de la seconde valeur ;
le processeur est configuré pour indiquer la ou les parties des données d'image qui ne doivent pas être affichées en fonction des valeurs de signal de mouvement.

11. Appareil selon l'une quelconque des revendications 9 et 10, dans lequel :
le signal de mouvement est divisé en segments par des indicateurs ayant des valeurs d'indicateur indiquant des transitions du signal de mouvement entre des valeurs de signal de mouvement ; et
le processeur est configuré pour indiquer la ou les parties des données d'image qui ne doivent pas être affichées en fonction des valeurs d'indicateur.

12. Procédé exécuté par un dispositif de traitement, consistant à :
générer, au moyen du dispositif de traitement, un signal de mouvement indiquant un mouvement d'un dispositif d'enregistrement d'image, au fil du temps, pendant une génération de données d'image ;
réaliser un traitement à effet différé sur le signal de mouvement, le traitement à effet différé consistant à réaliser un traitement de telle sorte que, après une modification du signal de mouvement, une modification ultérieure ne soit pas permise pendant une période de temps prédéterminée ; et
stocker, sur un support de stockage :
les données d'image ; et
le signal de mouvement.

13. Support lisible par ordinateur non transitoire stockant des instructions qui, lorsqu'elles sont exécutées par un ordinateur, contraignent l'ordinateur à :
générer, au moyen de l'ordinateur, un signal de mouvement indiquant un mouvement d'un dispositif d'enregistrement d'image, au fil du temps, pendant une génération de données d'image ;
réaliser un traitement à effet différé sur le signal de mouvement, le traitement à effet différé consistant à réaliser un traitement de telle sorte que, après une modification du signal de mouvement, une modification ultérieure ne soit pas permise pendant une période de temps prédéterminée ; et
stocker, sur un support de stockage :
les données d'image ; et
le signal de mouvement.

14. Procédé de reproduction d'images au moyen d'un dispositif de reproduction, consistant à :
recevoir des données d'image enregistrées ;
recevoir un signal de mouvement indiquant un mouvement d'un dispositif d'enregistrement d'image, pendant un enregistrement des données d'image ;
analyser, au moyen du dispositif de reproduction, le signal de mouvement ;
indiquer, en se basant sur le signal de mouvement, au moins une partie des données d'image qui ne doivent pas être affichées ; et
générer des données d'image modifiées se composant des données d'image enregistrées, la ou les parties des données d'image qui ne doivent pas être affichées étant omises.

15. Support lisible par ordinateur non transitoire stockant des instructions qui, lorsqu'elles sont exécutées par un ordinateur, contraignent l'ordinateur à :
recevoir des données d'image enregistrées ;
recevoir un signal de mouvement indiquant un mouvement d'un dispositif d'enregistrement d'image, pendant un enregistrement des données d'image ;
analyser, au moyen de l'ordinateur, le signal de mouvement ;
indiquer, en se basant sur le signal de mouvement, au moins une partie des données d'image qui ne doivent pas être affichées ; et
générer des données d'image modifiées se composant des données d'image enregistrées, la ou les parties des données d'image qui ne doivent pas être affichées étant omises.
